# FASCICULE DE BREVET EUROPEEN

(11) **EP 0 591 033 B1**
(45) Date de publication et mention de la délivrance du brevet: **13.03.1996**
(21) Numéro de dépôt: 93402338.3
(22) Date de dépôt: 24.09.1993
(51) Int. Cl.: B23B 29/18, B23Q 5/34

(54) **Porte-outil d'usinage interne à dépincement**
Werkzeughalter für innere Bearbeitung
Toolholder for boring

(30) Priorité: 29.09.1992 FR 9211608
(43) Date de publication de la demande: 06.04.1994
(73) Titulaire: FRAMATOME CONNECTORS INTERNATIONAL, F-92084 Paris La Défense (FR)
(72) Inventeur: Mortier, Guy, F-72100 Bonnetable (FR); Chartrain, Jean-Claude, F-72390 Lavare (FR)
(74) Mandataire: Fort, Jacques

(56) Documents cités:
- CH-A- 99 334
- GB-A- 481 831
- US-A- 2 269 908

## Description

L'invention concerne les porte-outil d'usinage interne utilisables sur les machines-outils selon le préambule de la revendication 1. Elle est applicable sur les divers types de machines-outils existants, notamment sur les postes à outils des tours à commande numérique équipées de tourelles, sur les broches de fraiseuses ou de centres d'usinage, et même sur les machines-outils ne comportant pas de tourelle à condition de munir le porte-outil d'un organe moteur.

L'une des causes d'usure des tranchants ou pointes d'outil est le frottement sur la surface usinée pendant la course de retour qui peut également provoquer la casse de l'outil. Sur les tours à commande simple munis d'un chariot portant l'outil, cette opération s'effectue généralement de façon manuelle, en dégageant l'outil de la surface usinée avant de le ramener en position de repos. Cette opération est difficile à réaliser sur les tours à commande numérique equipées de tourelles, les fraiseuses et les centres d'usinage.

La présente invention vise notamment à fournir un porte-outil permettant un recul, souvent dit de dépincement, automatique de l'outil avant retour de ce dernier à sa position de départ en vue d'effectuer une nouvelle passe d'usinage ou d'usiner une nouvelle pièce suivant une même séquence prédéterminée.

Dans ce but, l'invention propose notamment un porte-outil ayant un corps muni d'une queue de fixation sur machine, portant un coulisseau porte-outil déplaçable par une came rotative d'avance d'une position de retrait à une position de saillie maximum lorsque la came passe d'une position initiale à une première position angulaire déterminée et de la position de saillie maximale à la position de retrait lorsque la came tourne à partir d'une seconde position angulaire plus éloignée que la première de l'origine, caractérisé en ce que ladite came d'avance est couplée à une came de dépincement provoquant un déplacement de l'outil orthogonalement à la direction d'avance et éloignant le tranchant de la surface usinée lorsque la came rotative d'avance passe de la première à la seconde position angulaire déterminée.

Dans un mode avantageux de réalisation, l'outil est monté dans une cassette articulée sur le coulisseau autour d'un axe orthogonal à la direction d'avance et la came de dépincement est prévue de façon à déplacer angulairement la cassette entre deux positions prédéterminées.

L'invention sera mieux comprise à la lecture de la description qui suit d'un mode particulier de réalisation donné à titre d'exemple non-limitatif. La description se réfère aux dessins qui l'accompagnent, dans lesquels :
- la figure 1 est une vue simplifiée d'un porte-outil selon un mode particulier de réalisation de l'invention, en coupe suivant un plan passant par son axe ;
- la figure 2 est une demi-vue de-dessus du porte-outil de la figure 1 ;
- la figure 3 est une vue du porte-outil, suivant la ligne III-III de la figure 1, l'équipage pendulaire étant enlevé ;
- la figure 4 montre le profil développé de la came de dépincement et celui de la came d'avance, en fonction de l'angle de rotation α des cames ;
- la figure 5 est une vue éclatée montrant le coulisseau, la cassette et le porte-cassette d'un porte-outil conforme au schéma de la figure 5 ;
- la figure 6 est une vue de la cartouche en coupe, suivant la ligne VI-VI de la figure 5.

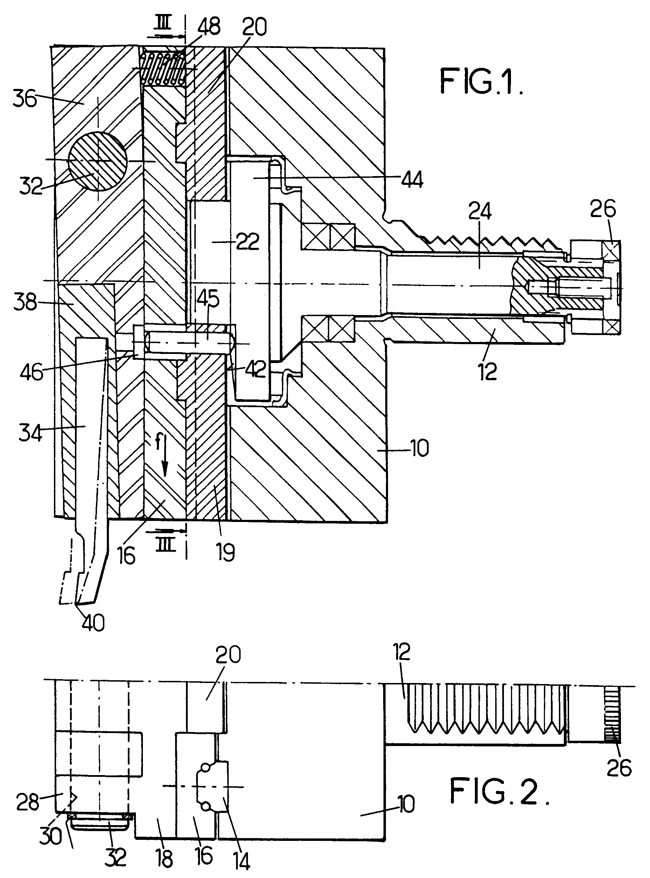

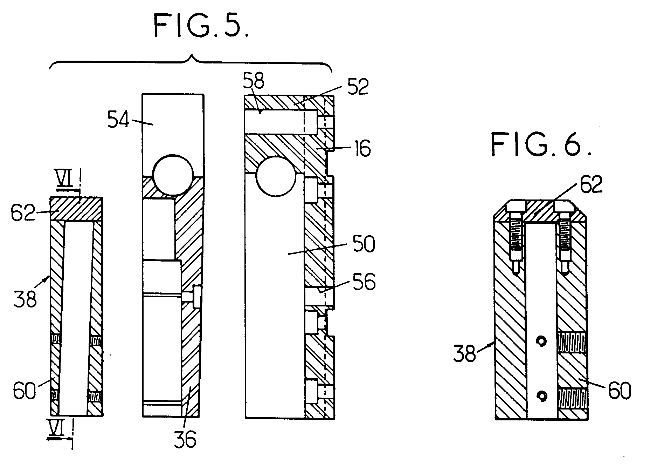

Le porte-outil dont la constitution de principe est montré en figures 1 à 3 comporte un corps 10 muni d'une queue 12 de fixation sur une machine-outil. Le corps 10 porte deux chemins de guidage 14 orthogonaux à l'axe de la queue 12. Ces chemins sont destinés à recevoir des rails à billes 16 solidaires d'un coulisseau 18 qui peut donc se déplacer dans le sens des chemins. Sur le coulisseau sont fixés deux talons 19 et 20. Ces talons sont séparés d'une distance correspondant à la dimension radiale d'une came d'avance 22 prolongée par une tige 24 placée dans l'axe de la queue 12 et portant à son extrémité un pignon d'entraînement 26. On voit que la rotation de la came d'avance 22 à partir de la position initiale de repos montrée en figure 2 provoque un mouvement de va et vient du coulisseau d'abord dans la direction de la flèche f, puis dans la direction opposée. La ligne inférieure de la figure 4 montre une loi possible de variation du déplacement d du coulisseau en fonction de l'angle α de rotation de la came d'avance 22 à partir de la position dans laquelle elle est montrée en figures 1 et 2.

Le coulisseau 18 comporte des ailes 28 en saillie vers l'avant, dans lesquelles sont ménagés des alésages alignés 30 de réception d'un axe 32 qui peut être retenu par des moyens quelconques, tels que des anneaux élastiques fendus ou circlips. Cet axe est orthogonal à l'axe de la queue 12 et il est décalé transversalement. Il constitue une articulation de montage d'un équipage pendulaire portant l'outil 34 et permet à l'équipage de se déplacer angulairement de quelques degrés entre la position de repos montrée en traits pleins et une position avancée où l'outil occupe la position indiquée en traits mixtes.

L'équipage représenté en figure 1 peut être regardé comme comprenant un porte-cassette 36 dans lequel est ménagé un trou de passage de l'axe 32 et une cassette 38 munie de moyens (non représentés) de fixation amovible dans le porte-cassette. Dans la cassette est ménagée un logement de réception de l'outil 34, dont la pointe 40 de travail est en saillie radiale par rapport à l'axe commun de la queue 12 et de la tige 24.

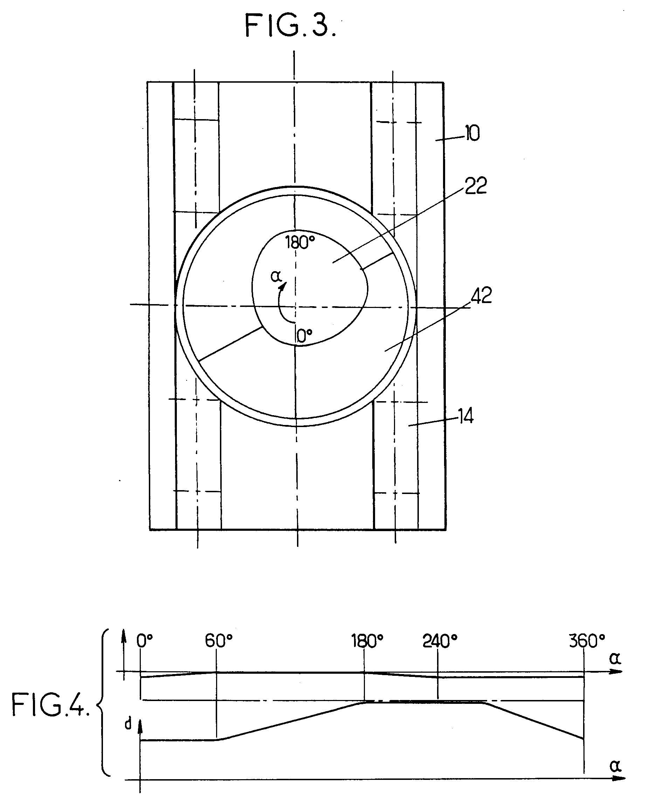

Le porte-outil comporte une came de dépincement 42 coopérant avec l'équipage pendulaire de façon à changer son orientation au fur et à mesure du déplacement angulaire de la came d'avance. Dans le cas illustré sur les figures 1 et 3, la came de dépincement 42 est une came latérale, placée sur le flanc d'une collerette 44 solidaire de la tige 24. Un poussoir 45 coulissant dans un trou prévu dans le coulisseau et le talon 18 transmet la force de pression exercée par la came 42 à un grain d'appui 46 emmanché dans le porte-cassette 36. Ce dernier est repoussé en permanence vers la position où il est montré en figure 1 par un ou plusieurs ressorts de rappel 48 comprimés entre le talon 20 et le porte-cassette et logés chacun dans un passage du coulisseau 16.

Le profil de la came latérale de dépincement peut avoir l'allure montrée schématiquement en figure 4 : on constate que la saillie augmente progressivement pour un angle de rotation α de 0 à 60°, pour lequel la came d'avance 22 n'a aucune action sur le coulisseau. La saillie de la came de dépincement 42 reste ensuite constante de 60° à 180°, pendant la course d'avance de l'outil 34 provoquée par la came 22. Puis, pour un angle α allant de 180 à 240°, la came de dépincement dégage l'outil de la surface usinée. Enfin, l'outil reste dégagé pendant la course de retour donnée par la came 22 et qui se termine pour un angle de 360°. D'autres loi de variation seraient évidemment possibles.

Les composants du porte-outil dont la constitution de principe est montrée en figures 1 à 3 sont réalisés en fonction de la nature de l'outil et de la machine qui doit recevoir le porte-outil. Le coulisseau et l'équipage pendulaire peuvent être tels que représentés sur les figures 5 et 6, où les organes correspondant à ceux de la figure 1 portent le même numéro de référence. Le coulisseau 16 comporte deux ailes 50 parallèles l'une à l'autre, délimitant un espace de réception du porte-cassette 36. Un bossage central 52 du coulisseau sépare deux oreilles 54 du porte-cassette 36. L'alésage de réception de l'axe 32 est ménagé d'une part dans les ailes 50 et le bossage central 52 du coulisseau 16, d'autre part dans les oreilles du porte-cassette 36. Le fond du coulisseau 16 est percé d'un trou 56 de passage du poussoir 44, de trous étagés de passages de vis de fixation des talons et d'un logement 58 pour le ressort 48.

Enfin, la cassette 38 est constituée en un corps 60 et un chapeau 62 assemblé par des vis. Le corps 60 est percé de passages permettant de fixer l'outil à l'aide de vis de pression.

La disposition décrite n'est pas la seule possible et peut au surplus être complétée par un moteur d'entraînement des cames.

## Revendications

1. Porte-outil d'usinage interne ayant un corps (10) muni d'une queue (12) de fixation sur machine, portant un coulisseau (18) déplaçable par une came rotative d'avance (22) d'une position de retrait à une position de saillie maximum lorsque la came (22) passe d'une position initiale à une première position angulaire déterminée et de la position de saillie maximale à la position de retrait lorsque la came poursuit sa rotation, à partir d'une seconde position angulaire plus éloignée que la première de l'origine, caractérisé en ce que ladite came d'avance (22) est couplée à une came de dépincement (42) provoquant un déplacement de l'outil orthogonalement à la direction d'avance et éloignant le tranchant de la surface usinée lorsque la came rotative d'avance (22) passe de la première à la seconde position angulaire déterminée.

2. Porte-outil selon la revendication 1, caractérisé en ce que l'outil (34) est monté dans une cassette (38) tournant sur le coulisseau (18) autour d'un axe (32) orthogonal à la direction d'avance et la came de dépincement (42) est prévue de façon à déplacer angulairement la cassette (38) entre deux positions prédéterminées.

3. Porte-outil selon la revendication 2, caractérisé en ce que la cassette (38) constitue, avec un porte-cassette (36) dans lequel elle est montée, un équipage pendulaire.

4. Porte-outil selon la revendication 1, 2 ou 3, caractérisé en ce que la came de dépincement (42) est une came latérale, placée sur le flanc d'une collerette (44) solidaire de la came d'avance (22).

5. Porte-outil selon la revendication 4, caractérisé par un poussoir (44) coulissant dans un trou prévu dans le coulisseau (18) et transmettant la force de pression exercée par la came de dépincement (42).

## Claims

1. Tool-holder for internal machining having a body (10) equipped with a fixation tail (12) on machine, carrying a tool-slide (18) shiftable by an advance rotating cam (22) from a retiring position to a position of maximum spurt when the cam passes from an initial position to a predetermined first angular position and from the position of maximal spurt to a retiring position when the cam pursues its rotation, from a second angular position more distant than the first position from origin, characterized in that said advance cam (22) is coupled with an unclamping cam (42) causing a shift of the tool orthogonally to the forward direction and moving away the cutting edge from the machining surface when the advance rotative cam passes from the first to the second predetermined angular position.

2. Tool-holder according to claim 1, characterized in that the tool (34) is fixed in a cassette rotatable (38) on the tool-slide (18) around an axis (32) orthogonal to the forward direction and the unclamping cam (42) is arranged to angularly move the cassette between two predetermined positions.

3. Tool-holder according to claim 2, characterized in that the cassette (38) constitutes, with a cassette-holder (36) in which it is fixed, a pendular set.

4. Tool-holder according to claim 1, 2 or 3, characterized in that the unclamping cam (42) is a lateral cam placed on the flank of a flange (44) fast with the advance cam (22).

5. Tool-holder according to claim 4, characterized by a push rod (44) slidable in a hole formed in the tool-slide (18) and transmitting pressure force exerted by the unclamping cam (42).

## Patentansprüche

1. Werkzeughalter für innere Bearbeitung, der einen Körper (10) umfaßt, der mit einem Endstück (12) zur Befestigung an einer Maschine versehen ist und einen Schlitten (18) trägt, der mittels eines Vorschubdrehnockens (22) aus einer Einzugs- in eine maximale Ausfahrposition verschiebbar ist, wenn der Nocken (22) aus einer Ausgangsposition in eine erste bestimmte Winkelposition und aus der maximalen Ausfahrposition in die Einzugsposition fährt, wenn der Nocken sich aus einer zweiten Winkelposition heraus weiterdreht, die weiter als die erste von der Ausgangsposition entfernt ist, dadurch gekennzeichnet, daß der Vorschubnocken (22) mit einem Abklemmnocken (42) gekoppelt ist, der ein Verschieben des Werkzeugs senkrecht zur Vorschubrichtung bewirkt und die Schneidfläche der bearbeiteten Fläche entfernt, wenn der Vorschubdrehnocken (22) aus der ersten in die zweite bestimmte Winkelposition fährt.

2. Werkzeughalter nach Anspruch 1, dadurch gekennzeichnet, daß das Werkzeug (34) in einer Kassette (38) montiert ist, die auf dem Schlitten (18) um eine Achse (32) dreht, die senkrecht zur Vorschubrichtung ist, und der Abklemmknocken (42) ist so vorgesehen, daß er die Kassette (38) winklig zwischen zwei vorbestimmten Positionen hin- und herbewegt.

3. Werkzeughalter nach Anspruch 2, dadurch gekennzeichnet, daß die Kassette (38) mit einem Kassettenhalter (36), in dem sie montiert ist, ein pendelndes, bewegliches Organ bildet.

4. Werkzeughalter nach Anspruch 1, 2 oder 3, dadurch gekennzeichnet, daß der Abklemmnocken (42) ein seitlicher Nocken ist, der an der Flanke eines Kragens (44) montiert ist, der fest mit dem Vorschubnocken (22) verbunden ist.

5. Werkzeughalter nach Anspruch 4, gekennzeichnet durch einen Kolben (44), der in einer Öffnung gleitet, die in dem Schlitten (18) vorgesehen ist, und die von dem Abklemmnocken (42) ausgeübte Druckkraft überträgt.
